Europäisches Patentamt

European Patent Office

Office européen des brevets

(19)

(11) Numéro de publication : **0 280 599 B1**

## (12) FASCICULE DE BREVET EUROPEEN

(45) Date de publication du fascicule du brevet :
29.05.91 Bulletin 91/22

(51) Int. Cl.⁵ : **G01P 5/00, G01P 7/00**

(21) Numéro de dépôt : 88400238.7

(22) Date de dépôt : 02.02.88

(54) **Procédé et dispositif de mesure de la vitesse par rapport à l'air d'un hélicoptère à basse vitesse.**

(30) Priorité : 04.02.87 FR 8701367

(43) Date de publication de la demande :
31.08.88 Bulletin 88/35

(45) Mention de la délivrance du brevet :
29.05.91 Bulletin 91/22

(84) Etats contractants désignés :
DE GB IT

(56) Documents cités :
EP-A- 0 204 856
GB-A- 2 136 576
US-A- 4 023 409

(73) Titulaire : SOCIETE DE FABRICATION
D'INSTRUMENTS DE MESURE (S.F.I.M.)
13, avenue Marcel Ramolfo-Garnier
F-91301 Massy (FR)

(72) Inventeur : Favre, Hélène
2 Square Roger Salengro
F-91300 Massy (FR)
Inventeur : Audren, Jean Thierry
14 Allée des Genêts Les Ulis
F-91400 Orsay (FR)

(74) Mandataire : Martin, Jean-Jacques et al
Cabinet REGIMBEAU 26, Avenue Kléber
F-75116 Paris (FR)

Jouve, 18, rue Saint-Denis, 75001 PARIS

## Description

La présente invention est relative à un procédé et à un dispositif de mesure de la vitesse par rapport à l'air d'un hélicoptère à basse vitesse.

Actuellement les dispositifs utilisés pour mesurer la vitesse d'un hélicoptère par rapport à l'air, tel que celui décrit dans la demande de brevet américain n° 4 023 409, permettent d'obtenir des résultats d'une précision satisfaisante pour des vitesses relatives moyennes ou élevées, c'est-à-dire supérieures à 50 noeuds soit sensiblement 25 m/s. Par ailleurs, on connaît de la demande de brevet européen n° 0 280 599 un dispositif de mesure de la vitesse par rapport à l'air d'un hélicoptère à basse vitesse. Ces dispositifs de mesure basés sur le principe de la comparaison de la pression dynamique engendrée par le déplacement de l'hélicoptère dans l'air et de la pression statique de celui-ci ne peuvent prétendre permettre d'établir les paramètres du vecteur vitesse de l'hélicoptère, seule la vitesse axiale, selon l'axe longitudinal de l'hélicoptère et dans la direction arrière-avant de celui-ci, pouvant seule être déterminée. Le remplacement de ces dispositifs par des dispositifs plus complexes ne peut être envisagé, ces dispositifs plus complexes étant réservés aux installations à poste fixe des centres d'essais en vol.

La présente invention a pour but de remédier aux inconvénients précités par la mise en oeuvre d'un procédé et d'un dispositif de mesure de la vitesse par rapport à l'air d'un hélicoptère à partir de paramètres de fonctionnement mécanique et dynamique de l'hélicoptère en vol.

Un autre objet de la présente invention est la mise en oeuvre d'un procédé et d'un dispositif de mesure de la vitesse par rapport à l'air d'un hélicoptère permettant de déterminer le vecteur vitesse de de l'hélicoptère par rapport à l'air dans un repère d'axes longitudinal x et transversal y définisssant, lorsque l'hélicoptère est au sol, un plan parallèle à ce dernier.

Un autre objet de la présente invention est également la mise en oeuvre d'un procédé et d'un dispositif de mesure de la vitesse par rapport à l'air d'un hélicoptère en basse vitesse permettant d'obtenir des valeurs de vitesse mesurée de bonne précision, afin d'améliorer la sécurité lors de vols stationnaires, au cours de vols en opérations de sécurité civile ou d'interventions militaires ou de police.

Un autre objet de la présente invention est enfin la mise en oeuvre d'un procédé et d'un dispositif de mesure de la vitesse par rapport à l'air d'un hélicoptère en basse vitesse permettant dans le cas d'une application à un hélicoptère armé, d'améliorer les corrections de tir des armes héliportés non guidées.

Le procédé de mesure de la vitesse par rapport à l'air d'un hélicoptère à basse vitesse objet de l'invention, notamment au voisinage du régime de vol stationnaire, l'hélicoptère comportant un rotor de sustentation, un rotor anti-couple, des premiers moyens de commande du pas cyclique et du pas collectif du rotor de sustentation et des deuxièmes moyens de commande du pas du rotor anti-couple, est remarquable en ce que, des directions longitudinale x et transversale y étant définies par un repère d'axes x, y lié au centre de gravité de l'hélicoptère et définissant, l'hélicoptère étant au sol, un plan parallèle à celui-ci, ce procédé consiste simultanément à mesurer le pas cyclique longitudinal des pales du rotor de sustentation, le pas cyclique latéral des pales du rotor de sustentation, l'accélération longitudinale et l'accélération transversale de l'hélicoptère, le pas collectif imprimé aux pales du rotor de sustentation et le pas imprimé aux pales du rotor anticouple. La vitesse longitudinale et la vitesse latérale de l'hélicoptère par rapport à l'air sont déterminées et établies à partir d'une fonction biunivoque des valeurs mesurées du pas cyclique longitudinal, du pas cyclique latéral, de l'accélération longitudinale, de l'accélération latérale, du pas collectif, du pas anticouple respectivement.

Le dispositif de mesure de la vitesse par rapport à l'air d'un hélicoptère, notamment au voisinage du régime de vol stationnaire, conformément au procédé selon l'invention, est remarquable en ce qu'il comporte des moyens de mesure du pas cyclique longitudinal des pales du rotor de sustentation, des moyens de mesure du pas cyclique latéral des pales du rotor de sustentation, des moyens de mesure de l'accélération longitudinale et de l'accélération latérale de l'hélicoptère par rapport au sol, des moyens de mesure du pas collectif imprimé aux pales du rotor de sustentation et du pas du rotor anticouple. Des moyens de calcul de la vitesse longitudinale et de la vitesse transversale de l'hélicoptère par rapport à l'air permettent d'établir la valeur de ces vitesses à partir d'une fonction biunivoque des paramètres de mesure du pas cyclique longitudinal, du pas cyclique latéral, du pas collectif et du pas du rotor anticouple.

Le procédé et le dispositif objet de l'invention trouvent application à l'industrie aéronautique civile et militaire, pour la mise en oeuvre de systèmes de navigation pour hélicoptères, à l'industrie de l'armement pour la mise en oeuvre des systèmes de conduite de tir héliportés.

Le procédé et le dispositif objet de l'invention seront mieux compris à la lecture de la description et à l'observation des dessins ci-après dans lesquels :

— les figures 1a et 1b représentent une vue d'un hélicoptère en vol permettant d'illustrer, de manière schématique, le procédé objet de l'invention,

— la figure 2 représente de façon non limitative, un organigramme de filtrage de la composante de vitesse due au vent et de calcul des valeurs de vitesse longitudinale et transversale de l'hélicoptère par rapport à l'air, conformément à une caractéristique avantageuse du procédé objet de l'invention,

– la figure 3 représente un schéma illustratif d'un dispositif de mesure de vitesse d'un hélicoptère par rapport à l'air conformément au procédé de la présente invention,

– la figure 4 représente un détail de réalisation selon une variante non limitative de moyens de calcul permettant la mise en oeuvre du procédé objet de la présente invention.

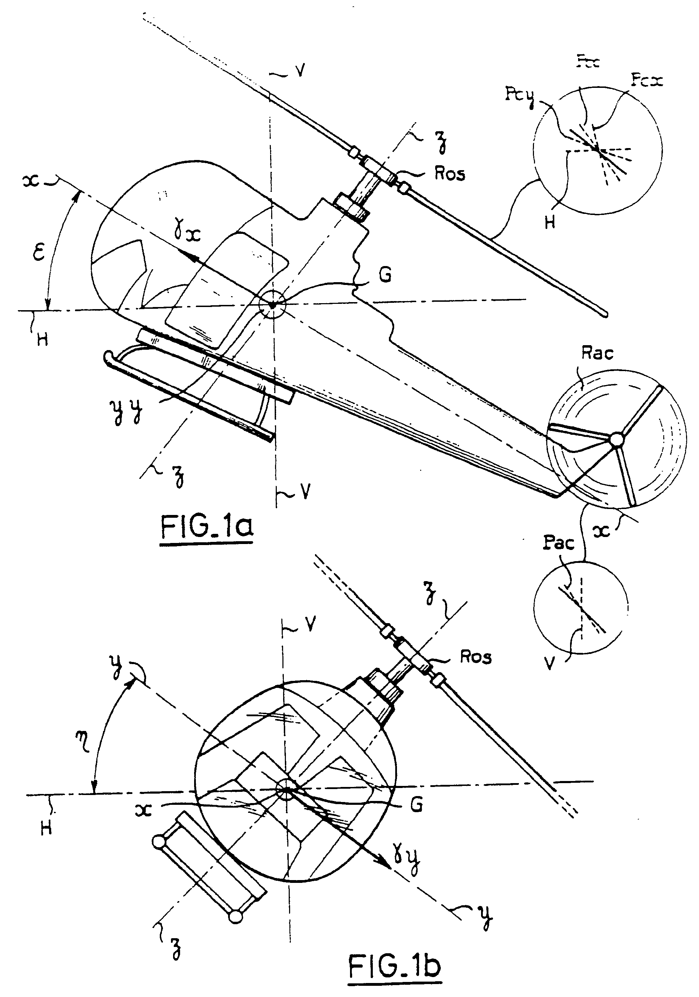

Le procédé de mesure de la vitesse par rapport à l'air d'un hélicoptère objet de la présente invention sera tout d'abord décrit en liaison avec les figures 1a et 1b, lesquelles permettent de définir, l'hélicoptère étant en vol, les paramètres mécaniques et/ou dynamiques permettant la mesure de la vitesse de l'hélicoptère par rapport à l'air, conformément au procédé objet de l'invention.

Le procédé objet de l'invention s'applique essentiellement à tout hélicoptère comportant un rotor de sustentation noté sur les figures 1a et 1b Ros, un rotor dit rotor anticouple Rac, ce rotor étant de manière connue en soi, destiné à exercer un couple de rappel s'opposant à la mise en rotation du corps de l'hélicoptère par réaction par rapport au mouvement de rotation du rotor de sustentation Ros. De manière classique, l'hélectoptère dont la vitesse par rapport à l'air est susceptible d'être mesurée conformément au procédé objet de l'invention, comporte de manière habituelle, des premiers moyens de commande du pas cyclique, notés de manière générale Pc et du pas collectif notés Pcol des pales du rotor de sustentation Ros. On rappelle pour mémoire que les pales du rotor de sustentation Ros présentent par rapport à une direction de référence, la direction H sur les figures 1a et 1b, une inclinaison moyenne dite inclinaison de pas collectif, laquelle peut bien entendu être commandée par le pilote à l'aide des premiers moyens de commande. A l'inclinaison de pas collectif des pales du rotor de sustentation Ros, est superposée une inclinaison dite de pas cyclique noté Pc. Sur les figures 1a et 1b, on a en outre représenté respectivement un système d'axes formant repère comportant un axe longitudinal noté xx et un axe latéral ou transversal noté yy. Les axes xx et yy, à titre d'exemple non limitatif, se coupent au au centre de gravité noté G de l'hélicoptère sensiblement et définissent, l'hélicoptère étant au sol, un plan parallèle à celui-ci. Les directions longitudinale x et transversale y de l'hélicoptère en vol sont définies par les axes xx et yy de celui-ci. L'axe zz est orthogonal au plan formé par les axes xx et yy précédemment cités au centre de gravité G de l'hélicoptère. Bien entendu, tout autre système d'axes défini par translation d'un vecteur déterminé peut de manière non limitative et sans sortir du cadre de l'objet de la présente invention, être utilisé.

A partir des axes précédemment définis, le pas cyclique des pales du rotor de sustentation Ros se décompose en un pas cyclique longitudinal Pcx des pales du rotor de sustentation Ros et un pas cyclique latéral noté Pcy des pales du rotor de sustentation Ros. Le pas cyclique longitudinal Pcx et le pas cyclique latéral Pcy apparaissent donc comme le pas d'inclinaison des pales appliqué respectivement à celles-ci, lorsqu'au cours de la rotation une pale considérée se trouve alignée dans la direction xx, respectivement yy. L'inclinaison de pas cyclique est ainsi périodiquement appliquée en superposition à l'inclinaison de pas collectif des pales du rotor de sustentation ainsi qu'il est bien connu du principe de fonctionnement des hélicoptères. En fonction des conditions de vol, le pilote est ainsi amené à modifier d'une part l'inclinaison de pas collectif, en vue d'assurer la sustentation de l'hélicoptère à une altitude déterminée, et d'autre part, l'inclinaison de pas cyclique et notamment d'inclinaison de pas cyclique longitudinal et de pas cyclique transversal, afin d'assurer le déplacement correspondant en translation de l'hélicoptère, soit en mouvement avant arrière, arrière avant, soit en mouvement latéral. La modification du pas collectif et du pas cyclique longitudinal et transversal est effectuée à l'aide des premiers moyens de commande précédemment cités. Ceux-ci seront décrits plus en détail ultérieurement dans la description.

Sur la figure 1a, on a représenté relativement aux pales du rotor de sustentation Ros, par rapport à une direction de référence telle que l'horizontale notée H, l'inclinaison de pas collectif Pcol et l'inclinaison de pas cyclique notée respectivement pas cyclique longitudinal Pcx et pas cyclique latéral Pcy, ces différentes inclinaisons étant représentées en trait mixte. La pale corresponante du rotor de sustentation Ros est représentée en trait continu et présente une inclinaison intermédiaire par rapport aux inclinaisons de pas cyclique et de pas collectif précédemment cité. En outre, l'hélicoptère comporte des deuxièmes moyens de commande du pas noté Pac du rotor anticouple c'est-à-dire, de l'inclinaison des pales de celui-ci. De la même façon, sur la figure 1a, on a représenté le paramètre d'inclinaison du pas anticouple Pac par un trait pointillé par rapport à une direction de référence, la verticale notée V. Les deuxièmes moyens de commande permettant également au pilote de régler l'inclinaison de pas anticouple du rotor anticouple.

Conformément à une caractéristique particulièrement avantageuse du procédé objet de l'invention, celui-ci consiste, afin de mesurer la vitesse par rapport à l'air de l'hélicoptère considéré, à mesurer simultanément le pas cyclique longitudinal Pcx des pales du rotor de sustentation Ros, le pas cyclique latéral Pcy des pales de ce même rotor de sustentation Ros, le pas collectif Pcol du rotor de sustentation Ros et le pas Pac imprimé aux pales du rotor anticouple Rac.

Ces paramètres dits mécaniques, c'est-à-dire reliés directement à la configuration mécanique d'éléments moteurs essentiels de l'hélicoptère étant mesurés, le procédé objet de l'invention consiste également à mesurer d'autres paramètres dits paramètres dynamiques, tels que l'accélération longitudinale $\gamma x$ de l'hélicoptère et l'accélération transversale $\gamma y$ de celui-ci. On notera, ainsi que représenté sur les figures 1a et 1b, que l'accélération longitudinale $\gamma x$ est en fait représentative directement de l'angle d'assiette de l'hélicoptère en mouvement, angle d'assiette noté $\varepsilon$ dans le plan xx-zz par rapport à l'horizontale notée H, alors que l'accélération $\gamma y$ est au contraire représentative de l'angle d'assiette noté $\eta$ de l'hélicoptère dans le plan zz-yy par rapport à la même direction de référence horizontale.

La vitesse longitudinale notée Vax et latérale notée Vay de l'hélicoptère par rapport à l'air, peut alors être, conformément au procédé objet de l'invention, déterminée et établie à partir d'une fonction biunivoque des valeurs mesurées du pas cyclique longitudinal Pcx et latéral Pcy, du pas collectif Pcol, du pas anticouple Pac et de l'accélération longitudinal $\gamma x$ et de l'accélération latérale $\gamma y$.

Conformément à un aspect particulièrement avantageux du procédé objet de l'invention, la fonction biunivoque permettant d'établir les vitesses longitudinale Vax et latérale Vay de l'hélicoptère par rapport à l'air est une combinaison linéaire des valeurs mesurées. On notera, ainsi qu'il sera décrit ultérieurement dans la description, qu'une combinaison linéaire des paramètres précédemment mesurés permet d'obtenir une bonne précision de restitution des composantes de vitesse longitudinale Vax et latérale Vay de l'hélicoptère par rapport à l'air. Cependant, et de manière non limitative, des termes correctifs non linéaires des valeurs mesurées du pas cyclique longitudinal Pcx et latéral Pcy, de l'accélération longitudinale $\gamma x$ et latérale $\gamma y$, du pas collectif Pcol et du pas anticouple Pac peuvent être introduites pourvu que le caractère biunivoque de la fonction précitée soit conservée. La fonction précitée peut alors consister en une fonction polynomiale des valeurs mesurées précédemment citées.

Selon un aspect particulièrement avantageux du procédé objet de l'invention, les combinaisons linéaires es paramètres de mesure établissant la valeur de la vitesse longitudinale Vax, respectivement latérale Vay de l'hélicoptère par rapport à l'air, ont même forme et vérifient respectivement les relations :

$$Vax = \alpha1\ Pcx + \alpha2\ Pcy + \alpha3\ \gamma x + \alpha4\ \gamma y + \alpha5\ Pcol + \alpha6\ Pac + \alpha7.$$

$$Vay = \beta1\ Pcx + \beta2\ Pcy + \beta3\ \gamma x + \beta4\ \gamma y + \beta5\ Pcol + \beta6\ Pac + \beta7.$$

Dans les relations précitées, les coefficients $\alpha1$, $\alpha2$, $\alpha3$, $\alpha4$, $\alpha5$, $\alpha6$, $\alpha7$ et respectivement $\beta1$, $\beta2$, $\beta3$, $\beta4$, $\beta5$, $\beta6$, $\beta7$ sont des coefficients appartenant à l'ensemble des nombres réels. Ainsi, et de façon non limitative, le choix d'un des coefficients précité à la valeur 0, correspond en fait à l'absence de mesure du paramètre correspondant, l'absence d'une telle mesure ne sortant pas du cadre de l'objet du procédé de mesure de la vitesse d'un hélicoptère par rapport à l'air conforme à présente invention.

Conformément au procédé objet de l'invention, l'identification des coefficients $\alpha1$, $\alpha2$, $\alpha3$, $\alpha4$, $\alpha5$, $\alpha6$, $\alpha7$ et respectivement $\beta1$, $\beta2$, $\beta3$, $\beta4$, $\beta5$, $\beta6$, $\beta7$ des combinaisons linéaires précitées et représentées par les relations précédentes, peut être effectuée à partir d'essais successifs, par exemple au cours d'un vol, pour un type d'hélicoptère donné. Dans ce but, un jeu d'appareils de mesure de référence des vitesses vax longitudinales et vitesses latérales vay est avantageusement placé sur l'appareil ou hélicoptère soumis à l'essai en plus des éléments de mesure nécessaire aux paramètres de mesure intervenant pour le calcul de la vitesse longitudinale Vax et latérale Vay par rapport à l'air de l'hélicoptère considéré.

A titre d'exemple non limitatif, les appareils de mesure de vitesse par rapport à l'air vax et vay constituant mesure de référence, peuvent être constitués par un appareil désigné sous le nom commercial de LORAS, fabriqué et commercialisé par la société PACER, cet appareil normalement disponible dans le commerce consistant en des capsules anémométriques entraînées par un moteur installé au sommet de la partie fixe du rotor de sustentation. Ce type d'appareil normalement disponible dans le commerce ne sera pas décrit, il permet de mesurer les vitesses longitudinales vax et latérales vay de référence de l'hélicoptère par rapport à l'air. D'autres appareils de mesure permettant d'obtenir les valeurs de vitesse de référence longitudinale vax et vay peuvent être utilisés tels que par exemple le système désigné sous le nom commercial de LASSIE, commercialisé par la société MARCONI. Dans ce cas cependant, l'appareil LASSIE est installé dans le flux d'air du rotor de sustentation Ros et en conséquence sous celui-ci. Ce type d'appareil permet notamment de déterminer les vitesses de référence de l'hélicoptère par rapport à l'air, telles que vitesses longitudinales vax, vitesses latérales vay et vitesses dites ascentionnelles notées vaz. Les deux types d'appareils précités peuvent convenir de la même manière, ainsi que bien entendu, tout appareil du type anémomètre basse vitesse du commerce, susceptible de donner la vitesse de l'hélicoptère par rapport à l'air en module et direction.

Au cours d'un vol d'essai de l'hélicoptère considéré équipé des appareils précités, on effectue au moins sept mesures de la valeur des vitesses de référence longitudinale par rapport à l'air vax et latérale vay à des vitesses différentes, ainsi que bien entendu des valeurs correspondantes à ces vitesses des paramètres de mesure correspondants, le pas cyclique longitudinal Pcx, le pas cyclique Pcy, l'accélération

longitudinale $\gamma$x et latérale $\gamma$y, le pas collectif Pcol et le pas anticouple Pac pour les différentes vitesses de référence vax et vay.

Bien entendu, la résolution du système linéaire peut alors être effectuée par les méthodes de calcul classique pour déterminer les coefficients $\alpha$1, $\alpha$2, $\alpha$3, $\alpha$4, $\alpha$5, $\alpha$6, $\alpha$7 et respectivement $\beta$1, $\beta$2, $\beta$3, $\beta$4, $\beta$5, $\beta$6, $\beta$7, correspondants.

Bien entendu, et de façon non limitative, il est avantageux de réaliser un nombre de mesures des valeurs de vitesse de référence vax et vay, ainsi que de leur paramètre de calcul correspondant, en nombre supérieur à 7, le système de combinaisons linéaires étant alors redondant. Dans ce cas, la résolution du système peut avantageusement être réalisée par la méthode des moindres carrés par exemple. Cette méthode parfaitement connue de l'homme de l'art de la résolution des systèmes linéaires, ne fera pas l'objet d'une description détaillée.

Les combinaisons linéaires précédemment citées ayant été déterminées ainsi que décrit précédemment, pour l'appareil de type considéré, celles-ci peuvent alors bien entendu de manière avantageuse être utilisées pour mesurer la vitesse longitudinale Vax, respectivement latérale Vay de l'hélicoptère en l'absence des appareils de mesure utilisés pour la détermination de ces coefficients.

Au cours des essais, afin d'assurer l'identification des coefficients des combinaisons linéaires ou des fonctions polynomiales précitées, on a pu constater que la restitution de la valeur de vitesse longitudinale Vax, respectivement latérale Vay, pour un type donné d'hélicoptère était sensiblement améliorée lorsque les valeurs de vitesse longitudinale Vax respectivement latérale Vay étaient sensiblement rendues indépendantes des paramètres croisés de pas cyclique Pcy, respectivement Pcx et d'accélération $\gamma$y, respectivement $\gamma$x, correspondants.

Dans ce cas, les coefficients $\alpha$2, $\alpha$4 et $\beta$1, $\beta$3 sont dans les relations 1 et 2 précédentes minimum. Ils ont pour valeur pour un hélicoptère de type donné $\alpha$2 m et $\alpha$4 m et respectivement $\beta$1 m, $\beta$3 m. Dans ce cas, les valeurs de la vitesse dite longitudinale et dite latérale de l'hélicoptère par rapport à l'air Vax et respectivement Vay, sont établies par rapport à des axes X, Y orientés sensiblement à 45° par rapport aux axes x, y axe longitudinal xx et axe latéral yy, de l'hélicoptère précédemment défini. Cette rotation d'axe a pour effet d'entraîner que l'influence sur les valeurs correspondantes de la vitesse des composantes orthogonales du pas cyclique Pcy, respectivement Pcx latéral et longitudinal, ainsi que des accélérations transversale $\gamma$y et longitudinale $\gamma$x est minimalisée.

Différents essais pour un type de matériel donné, par exemple un hélicoptère de combat commercialisé par la société française Aérospatiale sous la désignation de PUMA, ont montré que dans le cas où les fonctions biunivoques polynomiales étaient réduites à des combinaisons linéaires, la meilleure restitution des vitesses longitudinale Vax et latérale Vay était obtenue pour un nombre de coefficients de combinaisons linéaires égales à 7, les coefficients $\alpha$1, $\alpha$2, $\alpha$3, $\alpha$4, $\alpha$5, $\alpha$6, $\alpha$7 et respectivement $\beta$1, $\beta$2, $\beta$3, $\beta$4, $\beta$5, $\beta$6, $\beta$7. Dans ce cas, les écarts résiduels de vitesse sur la valeur de vitesse longitudinale Vax ont atteint 1,30 noeuds, alors que l'écart résiduel sur les vitesses latérales Vay ont atteint 1,68 noeuds, soit respectivement des écarts inférieurs à 1 m/s environ. Dans le cas de l'utilisation de combinaisons linéaires, le nombre de coefficients $\alpha$, $\beta$ pris égal à 7 permet donc d'obtenir une restitution de vitesse longitudinale Vax, respectivement latérale Vay, optimale.

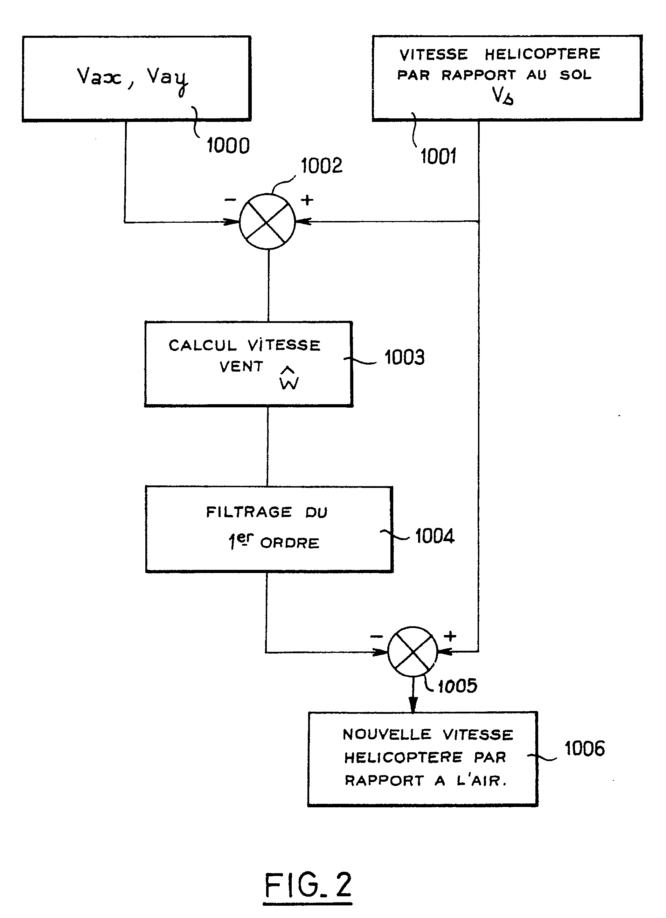

Une variante avantageuse du procédé de mesure de vitesse relative d'un hélicoptère par rapport à l'air, objet de l'invention, sera décrite en liaison avec la figure 2.

Conformément à la figure précitée, suite à une étape d'établissement notée 1000 des valeurs de vitesse longitudinale Vax, latérale Vay, ainsi que décrit précédemment, d'autres étapes peuvent être effectuées.

Ces étapes ainsi qu'on le remarquera en figure 2, peuvent consister en une estimation de la vitesse approchée du vent notée $\hat{W}$ en 1003, à partir d'une référence de vitesse de l'hélicoptère par rapport au sol, vitesse notée Vs, l'estimation de la vitesse approchée du vent $\hat{W}$ étant effectuée par soustraction en 1002 à la vitesse par rapport au sol Vs de la vitesse de l'hélicoptère par rapport à l'air, à partir des composantes longitudinale Vax et latérale Vay de celles-ci. La vitesse estimée du vent $\hat{W}$ est ensuite soumise à un filtrage en 1004 au moyen d'un filtre numérique du premier ordre, permettant de s'affranchir des phénomènes transitoires propres à l'hélicoptère, tels que par exemple un coup de manche intempestif au cours d'une manoeuvre intempestive de celui-ci par le pilote, bruit de mesure des capteurs de valeurs des paramètres de calcul de la vitesse longitudinale Vax et latérale Vay de l'hélicoptère par rapport à l'air. Un nouveau calcul de la valeur des vitesses longitudinale Vax et latérale Vay de l'hélicoptère par rapport à l'air est effectuée par une soustraction en 1005 de la vitesse estimée du vent $\hat{W}$ après filtrage et de la vitesse référence de vitesse par rapport au sol Vs.

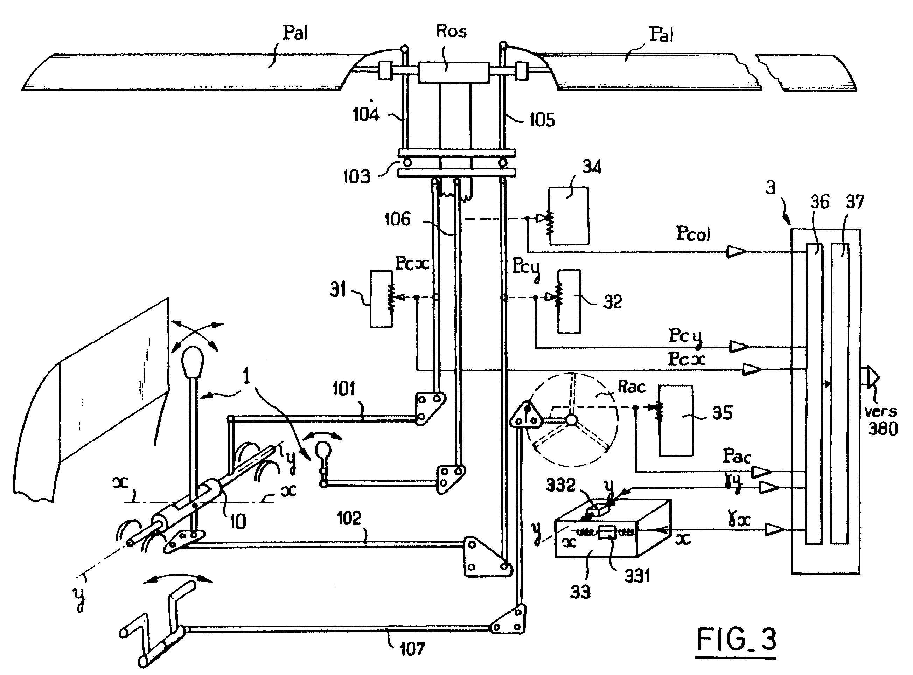

Une description plus détaillée d'un dispositif de mesure de la vitesse par rapport à l'air d'un hélicoptère, conformément au procédé objet de l'invention précédemment décrit, sera maintenant donnée en liaison avec la figure 3.

Sur la figure 3, on a représenté les organes essentiels d'un hélicoptère comportant un rotor de sustentation noté Ros, un rotor anticouple noté Rac, des premiers moyens de commande du pas cyclique Pc et du pas collectif Pcol, des pales du rotor de sustentation Ros. On notera que, de manière classique, les premiers moyens de commande notés 1 du pas cyclique Pc et du pas collectif Pcol des pales du rotor de sustentation Ros, comportent un manche, du type manche à balai, entraînant par un mécanisme 10 conférant au manche précité un double degré de liberté dans le direction longitudinale xx et dans la direction transversale ou latérale yy, un double jeu de tringlerie noté 101 et 102, commandant le pas cyclique longitudinal Pcx et le pas cyclique transversal Pcy, respectivement des pales Pal du rotor de sustentation, par l'intermédiaire d'un système d'embrayage et de tringles intermédiaires 104, 105. Le pas collectif Pcol est directement commandé par le jeu de tringlerie 106 et le système d'embrayage 103 et de tringles intermédiaires 104, 105 ou par tout moyen mécanique équivalent. Ces éléments mécaniques ne seront pas décrits plus en détail car ils font partie de la technique connue de la commande d'entraînement et d'orientation des pales d'un hélicoptère.

De même, l'hélicoptère tel que représenté en figure 3 en ces éléments essentiels, comporte des deuxièmes moyens notés 2 de commande du pas noté Pac du rotor anticouple Rac.

Ainsi que représenté en figure 3, et de manière particulièrement avantageuse, le dispositif objet de l'invention comporte des moyens notés 3, 31, de mesure du pas cyclique longitudinal Pcx des pales du rotor de sustentation Ros, ces moyens délivrant un signal de mesure du pas cyclique longitudinal Pcx. Le dispositif selon l'invention comporte également des moyens notés 3, 32, de mesure du pas cyclique latéral Pcy des pales du rotor de sustentation Ros. Ces moyens délivrent un signal de mesure du pas cyclique latéral Pcy.

En outre, ainsi qu'il est également représenté en figure 3, des moyens notés 3, 33, sont prévus, afin d'assurer la mesure de l'accélération longitudinale γx de l'hélicoptère par rapport au sol, et de l'accélération latérale γy de l'hélicoptère par rapport au sol, ces moyens 3, 33, délivrant un signal de mesure de l'accélération longitudinale γx et de l'accélération latérale y de l'hélicoptère par rapport au sol. Par accélération longitudinale γx et accélération latérale γ y de l'hélicoptère par rapport au sol, on entend en fait l'accélération totale de l'hélicoptère selon les axes xx et yy précédemment définis, compte tenu de la composante de la pesanteur agissant sur les moyens de mesure 33. De même, les moyens de mesure 34 du pas collectif Pcol imprimés aux pales du rotor du sustentation Ros permettent de délivrer un signal de mesure du pas collectif Pcol. De la même façon, la mesure du pas Pac du rotor anticouple Rac est assurée par des moyens 35 de mesure du pas précité, ces moyens délivrant un signal de mesure du pas Pac du rotor anticouple Rac.

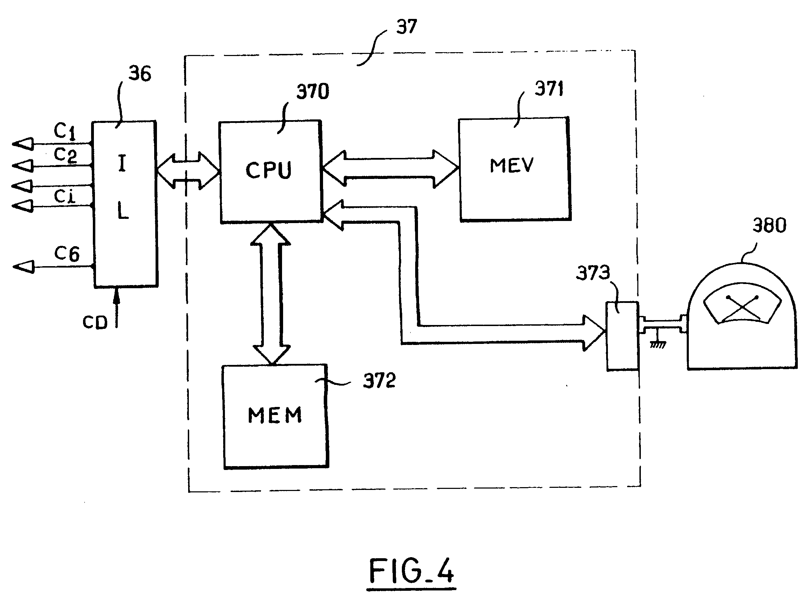

L'ensemble des moyens de mesure 31 du pas cyclique longitudinal Pcx, du pas cyclique transversal ou latéral Pcy 32, de l'accélération longitudinale γx et de l'accélération transversal ou latérale γy 33, du pas collectif, moyens 34, et du pas anticouple Pac 35, est connecté à un ensemble électronique 3 par des liaisons adaptées. L'ensemble électronique précité, comporte de manière avantageuse, un circuit d'interface 36, lequel sera décrit plus en détail en liaison avec la figure 4, et des moyens de calcul 37, de la vitesse longitudinale Vax et de la vitesse transversale Vay de l'hélicoptère par rapport à l'air, ces vitesses étant exprimées à partir, ainsi que décrit précédemment en liaison avec le procédé objet de l'invention, d'une fonction biunivoque des paramètres de mesure du pas cyclique longitudinal Pcx, du pas cyclique latéral Pcy, de l'accélération longitudinale γx, de l'accélération γy latérale, du pas collectif Pcol et du pas Pa du rotor anticouple Rac.

Selon une caractéristique avantageuse du dispositif objet de l'invention, les moyens 31, 32 de mesure du pas cyclique longitudinal Pcx et du pas cyclique latéral Pcy comprennent des capteurs de position des moyens de commande cyclique 101, 102 du pas du rotor de sustentation. Ainsi que représenté de manière schématique en figure 3, ces capteurs de position peuvent avantageusement être constitués par des potentiomètres de recopie de position dont la borne de connexion mobile est solidaire de la tringlerie 101, respectivement 102, de commande de l'orientation des pales du rotor de sustentation.

De la même façon, les moyens 34, 35 de mesure du pas collectif Pcol du rotor de sustentation Ros du pas Pac du rotor anticouple Rac, comprennent des capteurs de position des moyens de commande du pas collectif des pales du rotor de sustentation et du rotor anti-couple. Les capteurs de position sont également constitués par les potentiomètres de recopie de position, dont la borne mobile est reliée à la tringlerie de commande des rotors correspondants.

Ainsi qu'on l'a en outre représenté en figure 3, les moyens 33 de mesure de l'accélération longitudinale γx et de l'accélération transversale γy comportent avantageusement des accéléromètres à masse mobile, représentés schématiquement sur la figure 3 par les masses 331 et 332. Ainsi qu'on l'a déjà mentionné, ces accéléromètres délivrent un signal représentatif de l'accélération totale de l'hélicoptère selon les directions xx et yy, compte tenu de l'influence de la pesanteur.

Une description plus détaillée des moyens de calcul 3 sera donnée en liaison avec la figure 4.

Conformément à la figure 4 précitée, et notamment lorsque la fonction biunivoque permettant le calcul des vitesses longitudinale Vax et latérale Vay est une combinaison linéaire des valeurs mesurées, ces moyens comportent de préférence des moyens d'échantillonnage 36 et de numérisation des signaux de mesure du pas cyclique longitudinal Pcx et du pas cyclique Pcy de l'accélération longitudinale x, de l'accélération y, du pas collectif Pcol et du pas Pac du rotor anticouple. Ces moyens d'échantillonnage 36 peuvent avantageusement être constitués par une carte de conversion analogique numérique rapide, jouant le rôle d'interface entre les voies de connexion notées C1, C2, Ci, C6 sur la figure 4 de chacun des moyens de mesure, et les moyens de calcul proprement dits notés 37 sur la figure 3 et sur la figure 4.

Les moyens ce calcul 37 peuvent avantageusement être constitués par un calculateur d'une centrale inertielle liée pour hélicoptères, connue sous la dénomination anglo-saxonne de "strap-down". Ce type de central est commercialisé par la Demanderesse sous la référence 28 SH.

Les moyens de calcul proprement dits 37 peuvent également être constitués par un calculateur auxiliaire, lequel sera décrit ultérieurement dans la description.

Ainsi qu'on pourra le noter, les moyens d'échantillonnage et de numérisation des signaux de mesure comportent une entrée notée CD, laquelle constitue une entrée susceptible de recevoir les informations de vitesse au sol délivrées par un radar Doppler de bord de l'hélicoptère. Ceci afin de permettre la mise en oeuvre du filtrage de la vitesse estimée du vent ainsi que décrit précédemment en relation avec le procédé objet de l'invention.

Les moyens de calcul proprement dits peuvent également comporter, ainsi que représenté en figure 4, lorsque ces moyens de calcul sont constitués par un calculateur auxiliaire ainsi que représenté sur la figure précitée, une unité centrale de calcul notée CPU, notée également 370, et des moyens de mémorisation. L'unité centrale de calcul peut avantageusement être constituée par un microprocesseur commercialisé sous la référence 8080 par la société INTEL. En outre, les moyens de calcul 37 comportent des moyens 371 de mémorisation du type mémoire vive, destinés à mémoriser la valeur instantanée des valeurs de mesure numérisées. La mémoire vive 371 notée Mv sur la figure 4, présente de préférence une capacité mémoire de 0,5 kOctet. En outre, des moyens 372 de mémorisation de type mémoire morte sont prévus, la mémoire vive 371 et la mémoire morte 372 étant connectées à l'unité centrale par une liaison par BUS de type habituel.

Selon une caractéristique avantageuse du dispositif objet de l'invention, les moyens 372 de type mémoire morte notés MEM comportent pour un type d'hélicoptère donné, une table de valeur des coefficients $\alpha 1$, $\alpha 2$, $\alpha 3$, $\alpha 4$, $\alpha 5$, $\alpha 6$, $\alpha 7$ et $\beta 1$, $\beta 2$, $\beta 3$, $\beta 4$, $\beta 5$, $\beta 6$, $\beta 7$, permettant d'établir les fonctions biunivoques ou combinaisons linéaires exprimant les vitesses longitudinale Vax et latérale Vay, en fonction de paramètres de fonctionnement de l'hélicoptère. Les tables de valeurs précitées peuvent être constituées par des tables de valeurs multiples correspondant à la charge utile de l'hélicoptère, au centrage de la charge de celui-ci et donc à la position de son centre de gravité par exemple et peuvent être sélectionnées en fonction de l'utilisation correspondante de l'hélicoptère.

Bien entendu, les moyens de calcul comportent en outre un programme de calcul des valeurs des combinaisons linéaires ou des fonctions biunivoques exprimant la vitesse longitudinale Vax et transversale Vay de l'hélicoptère par rapport à l'air.

En outre, les moyens de calcul comportent également un programme de calcul de changement d'axe par rotation sensiblement égal à 45°, ainsi que décrit précédemment en liaison avec le procédé objet de l'invention.

Ainsi qu'on l'a représenté en outre en figure 4, le dispositif comporte des moyens d'affichage des valeurs instantanées des vitesses longitudinale Vax et latérale Vay. Ces moyens peuvent être constitués par exemple, ainsi que représenté schématiquement en figure 4, par un indicateur de vol stationnaire référencé 380.

On a ainsi décrit un procédé et un dispositif de mesure de la vitesse de l'hélicoptère par rapport à l'air particulièrement performant. Le procédé et le dispositif objets de l'invention permettent en effet de mesurer les composantes de vitesse par rapport à l'air de l'hélicoptère, composantes longitudinales et composantes latérales avec une précision meilleure que 1 m/s.

## Revendications

1. Procédé de mesure de la vitesse par rapport à l'air d'un hélicoptère, notamment au voisinage du régime de vol stationnaire, l'hélicoptère comportant un rotor de sustentation (Ros), un rotor anticouple (Rac) et des premiers moyens de commande du pas cyclique (Pc) et du pas collectif (Pcol) du rotor de sustentation (Ros) et des deuxièmes moyens de commande du pas (Pac) du rotor anticouple, caractérisé en ce que des directions longitudinale x et transversale y étant définies par un repère d'axes x, y lié au centre de gravité (G) de l'hélicoptère et définissant, l'hélicoptère étant au sol, un plan parallèle à celui-ci, ledit procédé consiste simultanément :
   - à mesurer le pas cyclique longitudinal (Pcx) des pales du rotor de sustentation (Ros),
   - à mesurer le pas cyclique latéral (Pcy) des pales du rotor de sustentation (Ros),
   - à mesurer l'accélération longitudinale ($\gamma$x) de l'hélicoptère,
   - à mesurer l'accélération latérale ($\gamma$x) de l'hélicoptère,
   - à mesurer le pas collectif (Pcol) imprimé aux pales du rotor de sustentation (Ros),
   - à mesurer le pas (Pac) imprimé aux pales du rotor anticouple (Rac),
   - à déterminer et établir la vitesse longitudinale (Vax) et latérale (Vay) de l'hélicoptère par rapport à l'air, à partir d'une fonction biunivoque des valeurs mesurées du pas cyclique longitudinal (Pcx) et latéral (Pcy), de l'accélération longitudinal (γx) et latérale (γy), du pas collectif (Pcol) et du pas anticouple (Pac) respectivement.

2. Procédé selon la revendication 1, caractérisé en ce que ladite fonction biunivoque permettant d'établir les vitesses longitudinale (Vax) et latérale (Vay) de l'hélicoptère par rapport à l'air est une combinaison linéaire desdites valeurs mesurées.

3. Procédé selon la revendication 1, caractérisé en ce que les combinaisons linéaires des paramètres de mesure établissant la valeur de la vitesse longitudinale (Vax) respectivement latérale (Vay) de l'hélicoptère par rapport à l'air ont même forme et vérifient respectivement les relations :

$$Vax = \alpha1\ Pcx + \alpha2\ Pcy + \alpha3\ \gamma x + \alpha4\ \gamma y + \alpha5\ Pcol + \alpha6\ Pac + \alpha7.$$

$$Vay = \beta1\ Pcy + \beta2\ Pcy + \beta3\ \gamma x + \beta4\ \gamma y + \beta5\ Pcol + \beta6\ Pac + \beta7.$$

relations dans lesquelles $\alpha1,.... \alpha7$ et $\beta1..... \beta7$ sont des coefficients appartenant à l'ensemble des nombres réels.

4. Procédé selon la revendication 3, caractérisé en ce que l'identification des coefficients $\alpha1, \alpha2.... \alpha7$ et $\beta1, \beta2,.... \beta7$ est effectuée à partir d'essais successifs par la méthode des moindres carrés.

5. Procédé selon l'une des revendications 3 ou 4, caractérisé en ce que en vue d'exprimer les valeurs de vitesse longitudinale (Vax) respectivement latérale (Vay) sensiblement indépendantes des paramètres croisés de pas cyclique (Pcy) respectivement (Pcx) et d'accélération (γy) respectivement (γx), les coefficients $\alpha2, \alpha4$ et $\beta1, \beta3$ étant ainsi minimum, et ayant pour valeur $\alpha2\ m\ \alpha4\ m$ et $\beta1\ m\ \beta3\ m$ respectivement, les valeurs de la vitesse longitudinale et latérale de l'hélicoptère par rapport à l'air (VAX) respectivement (VAY) sont établies par rapport à des axes X, Y orientés sensiblement à 45° par rapport aux axes x, y, axe longitudinale et axe latéral de l'hélicoptère, l'influence sur les valeurs correspondantes de la vitesse des composantes orthogonales du pas cyclique (Pcy) respectivement (Pcx) et des accélérations longitudinale (x) et transversale (y), étant minimalisée.

6. Procédé selon l'une des revendications 3 à 5, caractérisé en ce que, suite à l'établissement (1000) des valeurs de vitesse longitudinale (Vax) et latérale (Vay), sont effectués

— une estimation de la vitesse propre du vent ($\hat{W}$) à partir (1001) d'une référence de vitesse de l'hélicoptère par rapport au sol (Vs), par soustraction (1002, 1003),

— un filtrage (1004) de la vitesse estimée du vent ($\hat{W}$) au moyen d'un filtre numérique du premier ordre permettant de s'affranchir les phénomènes transitoires propres à l'hélicoptère tels que coup de manche intempestif, bruits de mesures de capteurs de valeurs des paramètres de calcul de la vitesse longitudinale (Vax) et latérale (Vay) de l'hélicoptère par rapport à l'air,

— un nouveau calcul (1006) de la valeur des vitesses longitudinale (Vax) et latérale (Vay) de l'hélicoptère par rapport à l'air, par soustraction (1005) de la vitesse estimée du vent ($\hat{W}$) après filtrage et de la référence de vitesse par rapport au sol (Vs).

7. Dispositif de mesure de la vitesse par rapport à l'air d'un hélicoptère, notamment au voisinage du régime de vol stationnaire, l'hélicoptère comportant un rotor de sustentation (Ros), un rotor anticouple (Rac), des premiers moyens de commande (1) du pas cyclique (Pc) et du pas collectif (Pcol), du rotor de sustentation (Ro) et des deuxièmes moyens de commande (2) du pas (Pac) du rotor anticouple (Rac), caractérisé en ce que ledit dispositif comporte :

— des moyens (3, 31) de mesure du pas cyclique longitudinal (Pcx) des pales du rotor de sustentation (Rox), délivrant un signal de mesure du pas cyclique longitudinal (Pcx),

— des moyens de mesure (3, 32) du pas cyclique latéral (Pcy) des pales du rotor de sustentation (Ros) délivrant un signal de mesure du pas cyclique latéral (Pcy).

— des moyens de mesure (3, 33) de l'accélération longitudinale (γx) et latérale (γy) de l'hélicoptère par rapport au sol délivrant un signal de mesure de l'accélération longitudinale (γx), un signal de mesure de l'accélération latérale (γy) respectivement,

— des moyens de mesure (34) du pas collectif (Pcol) imprimé aux pales du rotor de sustentation (Ros), délivrant un signal de mesure du pas collectif (Pcol),

— des moyens (35) de mesure du pas (Pac) du rotor anticouple (Rac) délivrant un signal de mesure du pas (Pac) du rotor anticouple (Rac),

— des moyens de calcul (3) de la vitesse longitudinale (Vax) et de la vitesse transversale (Vay) de l'hélicoptère par rapport à l'air, lesdites vitesses étant exprimées à partir d'une fonction biunivoque des paramètres de mesure du pas cyclique longitudinal (Pcx), du pas cyclique latéral (Pcy), de l'accélération longitudinale (γx), de l'accélération latérale (γy), du pas collectif (Pcol), du pas (Pac) du rotor du rotor anticouple (Rac).

8. Dispositif selon la revendication 7, caractérisé en ce que lesdits moyens (31, 32) de mesure du pas cyclique longitudinal (Pcx) et du pas cyclique latéral (Pcy) comprennent des capteurs de position desdits moyens de commande cyclique (101, 102) du pas du rotor de sustentation.

9. Dispositif selon la revendication 8, caractérisé en ce que lesdits moyens (34, 35) de mesure du pas collectif (Pcol) du rotor de sustentation (Ros) et du pas (Pac) du rotor anticouple (Rac) comprennent des capteurs de position des moyens de commande du pas collectif des pales du rotor de sustentation et anti-couple.

10. Dispositif selon la revendication 8, caractérisé en ce que lesdits moyens (33) de mesure de l'accélération longitudinale ($\gamma$x) et de l'accélération transversale ($\gamma$y) comportent des accéléromètres à masse mobile (331, 332).

11. Dispositif selon l'une des revendications 7 à 10, caractérisé en ce que, ladite fonction biunivoque étant une combinaison linéaire des valeurs mesurées, lesdits moyens de calcul (3) comportent :

– des moyens (36) d'échantillonnage et de numérisation des signaux de mesure du pas cyclique longitudinal (Pcx), du pas cyclique latéral (Pcy), de l'accélération longitudinale ($\gamma$x) et de l'accélération latérale ($\gamma$y), du pas collectif (Pcol) et du pas (Pac) du rotor anticouple,

– des moyens (371) de mémorisation du type mémoire vive destinés à mémoriser la valeur instantanée des valeurs de mesure numérisées,

– des moyens (372) de mémorisation du type mémoire morte comportant, pour un type d'hélicoptère donné, une table de valeurs des coefficients $\alpha_1,...\alpha_7$, $\beta_1....\beta_7$ permettant d'établir les combinaisons linéaires exprimant ces vitesses longitudinale (Vax) et latérale (Vay) en fonction de paramètres de fonctionnement.

12. Dispositif selon la revendication 11, caractérisé en ce que lesdits moyens de calcul comportent en outre un programme de calcul des valeur des combinaisons linéaires exprimant la vitesse longitudinale (Vax) et transversale (Vay).

13. Dispositif selon la revendication 11 ou 12, caractérisé en ce que lesdits moyens de calcul comportent en outre un programme de calcul de changement d'axe par rotation sensiblement égale à 45°.

14. Dispositif selon l'une des revendications 7 à 13, caractérisé en ce qu'il comporte en outre des moyens d'affichage des valeurs instantanées des vitesses longitudinale (Vax) et latérale (Vay).


## Ansprüche

1. Verfahren zur Messung der Geschwindigkeit eines Hubschraubers bezüglich der Luft, insbesondere in der Nähe des Zustandes des stationären Flugs, wobei der Hubschrauber aufweist : einen Auftriebsrotor (Ros), einen Heckrotor (Rac) und eine erste Steuereinrichtung der zyklischen Steigung (Pc) und der Gesamtsteigung (Pcol) des Auftriebsrotors (Ros) und eine zweite Steuereinrichtung der Steigung (Pac) des Heckrotors, **dadurch gekennzeichnet,** daß Längs- und Querrichtungen x und y durch ein Achsenbezugsystem x, y, das mit dem Schwerpunkt (G) des Hubschraubers verbunden ist, definiert sind, und während der Hubschrauber auf dem Boden steht, eine Ebene parallel zu diesem definieren, wobei das Verfahren gleichzeitig besteht aus :

– Messen der zyklischen longitudinalen Steigung (Pcx) der Blätter des Auftriebsrotors (Ros),
– Messen der zyklischen seitlichen Steigung (Pcy) der Blätter des Auftriebsrotors (Ros),
– Messen der longitudinalen Beschleunigung ($\gamma$x) des Hubschraubers,
– Messen der seitlichen Beschleunigung ($\gamma$y) des Hubschraubers,
– Messen der Gesamtsteigung (Pcol), die den Blättern des Auftriebsrotors (Ros) eingeprägt ist,
– Messen der Steigung (Pac), die den Blättern des Heckrotors (Rac) eingeprägt ist,
– Bestimmen und Feststellen der longitudinalen Geschwindigkeit (Vax) und der seitlichen Geschwindigkeit (Vay) des Hubschraubers bezüglich der Luft auf der Basis einer eineindeutigen Funktion der gemessenen Werte jeweils der jeweils zyklischen longitudinalen Steigung (Pcx) und der zyklischen seitlichen Steigung (Pcy), der longitudinalen Beschleunigung ($\gamma$x) und der seitlichen Beschleunigung ($\gamma$y), der Gesamtsteigung (Pcol) und der Steigung (Pac) des Heckrotors.

2. Verfahren nach Anspruch 1, dadurch gekennzeichnet, daß die eineindeutige Funktion, die erlaubt, die longitudinale Geschwindigkeit (Vax) und die seitliche Geschwindigkeit (Vay) des Hubschraubers bezüglich der Luft festzustellen, eine lineare Kombination der gemessenen Werte ist.

3. Verfahren nach Anspruch 1, dadurch gekennzeichnet, daß die linearen Kombinationen der Meßparameter, die den Wert jeweils der longitudinalen Geschwindigkeit (Vax) und der seitlichen Geschwindigkeit (Vay) des Hubschsaubers bezüglich der Luft bestimmen, die gleiche Form haben und jeweils die folgenden Beziehungen verwirklichen :

$$Vax = \alpha_1\, Pcx + \alpha_2\, Pcy + \alpha_3\, \gamma y + \alpha_4\, \gamma y + \alpha_5\, Pcol + \alpha_6\, Pac + \alpha_7$$

$$Vay = \beta_1\, Pcx + \beta_2\, Pcy + \beta_3\, \gamma y + \beta_4\, \gamma y + \beta_5\, Pcol + \beta_6\, Pac + \beta_7$$

in denen $\alpha_1... \alpha_7$ und $\beta_1... \beta_7$ Koeffizienten sind, die reelle Zahlen darstellen.

4. Verfahren nach Anspruch 3, dadurch gekennzeichnet, daß die Identifikation der Koeffizienten $\alpha_1$, $\alpha_2,... \alpha_7$ und $\beta_1, \beta_2,... \beta_7$ auf der Basis von sukzessiven Proben gemäß dem Verfahren der kleinsten Fehlerquadrate ausgeführt wird.

5. Verfahren nach Anspruch 3 oder 4, dadurch gekennzeichnet, daß, um die Werte der longitudinalen Geschwindigkeit (Vax) und der seitlichen Geschwindigkeit (Vay) auszudrücken, die im wesentlichen unabhängig von dem gekreuzten Parameter der zyklischen Steigung (Pcy) jeweils (Pcx) und der

Beschleunigungssteigung ($\gamma y$) jeweils ($\gamma y$) sind, wobei die Koeffizienten $\alpha_2$, $\alpha_4$ und $\beta_1$, $\beta_3$ auf diese Weise minimal sind und jeweils $\alpha_2$ m, $\alpha_4$ m und $\beta_1$m und $\beta_3$ m als Wert haben, die Werte der longitudinalen Geschwindigkeit (VAX) und seitlichen Geschwindigkeit (VAY) des Hubschraubers bezüglich der Luft bezüglich den Achsen X, Y bestimmt werden, die im wesentlichen einen Wedel von 45° bezüglich der Achsen x, y bilden, die die longitudinale Achse und die seitliche Achse des Hubschraubers sind, bilden, wobei der Einfluß auf die entsprechendnen Werte der Geschwindigkeit der orthogonalen Komponenten der zyklischen Steigung (Pcy, Pcx) und der longitudinalen Beschleunigung ($\gamma x$) und der seitlichen Beschleunigung ($\gamma y$) minimalisiert werden.

6. Verfahren nach einem der Ansprüche 3 bis 5, dadurch gekennzeichnet, daß in Folge des Feststellens (1000) der Werte der longitudinalen Geschwindigkeit (Vax) und der seitlichen Geschwindigkeit (Vay), ausgeführt wird :

– eine Schätzung der geeigneten Windgeschwindigkeit ($\hat{W}$) auf der Basis (1001) einer Referenzgeschwindigkeit (Vs) des Hubschraubers bezüglich der Erdoberfläche mittels einer Subtraktion (1002, 1003),

– Filtrieren (1004) der geschätzten Windgeschwindigkeit ($\hat{W}$) mittels eines nummerischen Filters erster Ordnung, der erlaubt, die vorübergehenden Phänomene loszuwerden, die dem Hubschrauber eigen sind, wie ungewollte Stöße der Steuersäule, Meßgeräwche der Sensoren der Werte der Rechenparameter der longitudinalen Geschwindigkeit (Vax) und der seitlichen Geschwindigkeit (Vay) des Hubschraubers bezüglich der Luft,

– eine neue Berechnung (1006) der Werte der longitudinalen Geschwindigkeit (Vax) und der seitlichen Geschwindigkeit (Vay) des Hubschraubers bezüglich der Luft durch eine Subtraktion (1005) der geschätzten Windgeschwindigkeit ($\hat{W}$) nach dem Filtrieren und der Referenzgeschwindigkeit (Vs) bezüglich der Erdoberfläche.

7. Vorrichtung zur Messung der Geschwindigkeit eines Hubschraubers bezüglich der Luft, insbesondere in der Nähe des Zustandes des stationären Flugs, wobei der Hubschrauber aufweist : einen Auftriebsrotor (Ros), einen Heckrotor (Rac), eine erste Steuereinrichtung (1) der zyklischen Steigung (Pc) und der Gesamtsteigung (Pcol) des Auftriebsrotors (Ros) und eine zweite Steuereinrichtung (2) der Steigung (Pac) des Heckrotors, dadurch gekennzeichnet, daß die Vorrichtung aufweist :

– eine Einrichtung (3, 31) zur Messung der zyklischen longitudinalen Steigung (Pcx) der Blätter des Auftriebsrotors (Ros), die ein Meßsignal der zyklischen longitudinalen Steigung (Pcx) abgibt,

– eine Einrichtung (3, 32) zur Messung der zyklischen seitlichen Steigung (Pcy) der Blätter des Auftriebsrotors (Ros), die ein Meßsignal der zyklischen seitlichen Steigung (Pcy) abgibt,

– eine Einrichtung (3, 33) zur Messung der longitudinalen Beschleunigung ($\gamma y$) und der seitlichen Beschleunigung ($\gamma y$) des Hubschraubers bezüglich der Erdoberfläche, die ein Meßsignal der longitudinalen Beschleunigung ($\gamma y$) und ein Meßsignal der seitlichen Beschleunigung ($\gamma y$) jeweils abgibt,

– eine Einrichtung (34) zur Messung der Gesamtsteigung (Pcol), die den Blättern des Auftriebsrotors (Ros) eingeprägt ist, wobei die Einrichtung ein Meßsignal der Gesamtsteigung (Pcol) abgibt,

– eine Einrichtung (35) zur Messung der Steigung (Pac) des Heckrotors (Rac), die ein Meßsignal der Steigung (Pac) des Heckrotors (Rac) abgibt,

– eine Einrichtung (3) für die Berechnung der longitudinalen Geschwindigkeit (Vax) und der seitlichen Geschwindigkeit (Vay) des Hubschraubers bezüglich der Luft, wobei die Geschwindigkeiten auf der Basis einer eineindeutigen Funktion der Meßparameter der zyklischen longitudinalen Steigung (Pcx), der zyklischen seitlichen Steigung (Pcy), der longitudinalen Beschleunigung ($\gamma x$), der seitlichen Beschleunigung ($\gamma y$) der Gesamtsteigung (Pcol), der Steigung (Pac) des Heckrotors (Rac) ausgedrückt werden.

8. Vorrichtung nach Anspruch 7, dadurch gekennzeichnet, daß die Einrichtungen (31, 32) zur Messung der zyklischen longitudinalen Steigung (Pcx) und der zyklischen seitlichen Steigung (Pcy) Sensoren der Position der zyklischen Steuereinrichtungen (101, 102) der Steigung des Auftriebsrotors aufweisen.

9. Vorrichtung nach Anspruch 8, dadurch gekennzeichnet, daß die Einrichtungen (34, 35) zur Messung der Gesamtsteigung (Pcol) des Auftriebsrotors (Ros) und der Steigung (Pac) des Heckrotors (Rac) Sensoren der Position der Steuereinrichtungen der Gesamtsteigung der Blätter des Auftriebsrotors und des Heckrotors aufweisen.

10. Vorrichtung nach Anspruch 8, dadurch gekennzeichnet, daß die Einrichtung (33) zur Messung der longitudinalen Beschleunigung ($\gamma y$) und der Querbeschlenigung ($\gamma y$) Beschleunigungsmesser (331, 332) mit bewegbarer Masse aufweisen.

11. Vorrichtung nach einem der Ansprüche 7 bis 10, dadurch gekennzeichnet, daß die eineindeutige Funktion eine lineare Kombination der gemessenen Werte ist, wobei die Recheneinrichtung (3) aufweist :

– eine Einrichtung (36) zur Abtastung und Digitalisierung der Meßsignale der zyklischen longitudinalen Steigung (Pcx), der zyklischen seitlichen Steigung (Pcy), der longitudinalen Beschleunigung ($\gamma y$) und der seitlichen Beschleunigung ($\gamma y$), der Gesamtsteigung (Pcol) und der Steigung (Pac) des Heckrotors,

– eine flüchtige Speichereinrichtung (371) zur Speicherung des augenblicklichen Wertes der digitalisierten Meßwerte,
- eine nicht-flüchtige Speichereinrichtung (372) die für einen gegebenen Hubschraubertyp eine Tafel mit Werten der Koeffizienten $\alpha_1$... $\alpha_7$, $\beta_1$... $\beta_7$ aufweist, die erlaubt, die linearen Kombinationen festzustellen die die longitudinale Geschwindigkeit (Vax) und die seitliche Geschwindigkeit (Vay) in Abhängigkeit der Betriebsparameter auszudrücken.

12. Vorrichtung nach Anspruch 11, dadurch gekennzeichnet, daß die Recheneinrichtung außerdem ein Programm für die Berechnung der Werte der linearen Kombinationen aufweist, die die longitudinale Geschwindigkeit (Vax) und die Quergeschwindigkeit (Vay) ausdrücken.

13. Vorrichtung nach Anspruch 11 oder 12, dadurch gekennzeichnet, daß die Recheneinrichtung außerdem ein Programm für die Berechnung der Achsenveränderung durch eine Rotation, die im wesentlichen gleich 45° ist, aufweist.

14. Vorrichtung nach einem der Ansprüche 7 bis 13, dadurch gekennzeichnet, daß sie außerdem eine Einrichtung zur Anzeige der augenblicklichen Werte der longitudinalen Geschwindigkeit (Vax) und der seitlichen Geschwindigkeit (Vay) aufweist.


## Claims

1. A method of measuring the speed with respect to the air of a helicopter, particularly in the region of stationary flight, said helicopter comprising a lift rotor, a tail rotor, first control means for the cyclic pitch and for the collective pitch of said lift rotor and second control means for the pitch of said tail rotor, wherein longitudinal x and transverse y directions are defined by a reference frame of axes x, y connected to the centre of gravity of said helicopter and defining, with said helicopter on the ground, a plane parallel to the ground, said method consisting of simultaneously :
measuring longitudinal cyclic pitch (Pcx) of blades of said lift rotor,
measuring lateral cyclic pitch (Pcy) of said blades of said lift rotor,
measuring longitudinal acceleration ($\gamma$x) of said helicopter,
measuring lateral acceleration ($\gamma$y) of said helicopter,
measuring collective pitch (Pcol) imposed on said blades of said lift rotor,
measuring pitch (Pac) imposed on the blades of said tail rotor,
determining and establishing longitudinal (Vax) and lateral (Vay) speed of said helicopter with respect to the air, from a biunivocal function of said measured values of said longitudinal (Pcx) and lateral (Pcy) cyclic pitch, said longitudinal ($\gamma$x) and lateral ($\gamma$y) acceleration, said collective pitch (Pcol) and said pitch of said tail rotor (Pac) respectively.

2. A method according to claim 1, wherein said biunivocal function permitting establishment of said longitudinal (Vax) and lateral (Vay) speeds of said helicopter with respect to the air is a linear combination of said measured values.

3. A method according to claim 2, wherein said linear combinations of said measurement parameters establishing said value of said longitudinal (Vax) and lateral (Vay) speed respectively of said helicopter with respect to the air are the same and verify respectively equations :

$$Vax = \alpha1\ Pcx + \alpha2\ Pcy + \alpha3\ \gamma y + \alpha4\ \gamma y + \alpha5\ Pcol + \alpha6\ Pac + \alpha7,$$

$$Vay = \beta1\ Pcx + \beta2\ Pcy + \beta3\ \gamma y + \beta5\ Pcol + \beta6\ Pac + \beta7,$$

wherein coefficients $\alpha1,...\ \alpha7$ and $\beta1.....\ \beta7$ are real numbers.

4. A method according to claim 3, wherein identification of said coefficients $\alpha1, \alpha2.... \alpha7$ and $\beta1, \beta2,....$ $\beta7$ is carried out from successive tests by a least squares method.

5. A method according to claim 3, wherein in order to express said values of longitudinal (Vax) and lateral (Vay) speeds respectively, substantially independent of crossed parameters of cyclic pitch (Pcy), (Pcx) respectively and of acceleration ($\gamma$y), ($\gamma$x), respectively, said coefficients $\alpha2, \alpha4$ and $\beta1, \beta3$ thus being a minimum, and having the value $\alpha2$ m $\alpha4$ m and $\beta1$ m $\beta3$ m respectively, said values of longitudinal (VAX) and lateral (VAY) speed of said helicopter with respect to the air are established with respect to axes X, Y oriented substantially at 45° with respect to said axes x, y, the longitudinal axis and lateral axis of said helicopter, the influence on said corresponding values of said speed of orthogonal components of said cyclic pitch (Pcy) respectively (Pcx) and of said longitudinal ($\gamma$x) and transverse ($\gamma$y) accelerations being minimised.

6. A method according to claim 3, wherein following establishment of said values of said longitudinal (Vax) and lateral (Vay) speed, there are carried out :
an estimation of wind speed ($\hat{W}$) from (1009) a reference of speed of said helicopter with respect to the ground, by substraction (1002, 1003),
filtering (1004) of said estimated wind speed ($\hat{W}$) by means of a first order numeric filter freeing calculation of said longitudinal (Vax) and lateral (Vay) speed of said helicopter with respect to the air from transitory phenomena due to said helicopter,
a new calculation (1006) of said value of longitudinal (Vax) and lateral (Vay) speeds of said helicopter with respect to the air, by substraction (1005) of said estimated wind speed ($\hat{W}$) after filtering and of said reference speed with respect to the ground.

7. Apparatus for measuring speed with respect to the air of a helicopter, particularly in the region of stationary flight, said helicopter comprising a lift rotor, a tail rotor, first control means for cyclic pitch (Pc) and for collective pitch (Pcol) of said lift rotor and second control means of pitch (Pac) of said tail rotor, said device comprising :

means (3, 31) for measurement of longitudinal cyclic pitch (Pcx) of blades of said lift rotor, and delivering a measurement signal of said longitudinal cyclic pitch (Pcx),

means (3, 32) for measuring lateral cyclic pitch (Pcy) of said blades of said lift rotor and delivering a measurement signal of said lateral cyclic pitch (Pcy),

means (3, 33) for measurement of longitudinal ($\gamma$x) and lateral ($\gamma$y) acceleration of said helicopter with respect to the ground and delivering a measurement signal of said longitudinal acceleration ($\gamma$x) and a measurement signal of said lateral acceleration ($\gamma$y) respectively,

means (34) for measurement of said collective pitch (Pcol) imposed on said blades of said lift rotor and delivering a measurement signal of said collective pitch (Pcol),

means (35) for measurement of said pitch (Pac) of said tail rotor and delivering a measurement signal of said pitch (Pac) of said tail rotor,

means (3) for calculation of longitudinal (Vax) and transverse (Vay) speed of said helicopter with respect to the air, said speeds (Vax, Vay) being expressed from a biunivocal function of measurement parameters of said longitudinal cyclic pitch (Pcx), of said lateral cyclic pitch (Pcy), of said longitudinal acceleration ($\gamma$y), of said lateral acceleration ($\gamma$y), of said collective pitch (Pcol) and of said pitch (Pac) of said tail rotor.

8. Apparatus according to claim 7, wherein said means (31, 32) for measurement of said longitudinal cyclic pitch (Pcx) and of said lateral cyclic pitch (Pcy) comprise displacement transducers for said means (101, 102) for cyclic control of pitch of said lift rotor.

9. Apparatus according to claim 8, wherein said means (34, 35) for measurement of said collective pitch (Pcol) of said lift rotor and of said pitch (Pac) of said tail rotor comprise displacement transducers for said control means of collective pitch of said blades of said lift and tail rotors.

10. Apparatus according to claim 8, wherein said means (3, 33) for measurement of said longitudinal acceleration ($\gamma$x) and of said transverse acceleration ($\gamma$y) comprise movable mass accelerometers (331, 332).

11. Apparatus according to claim 7, wherein said biunivocal function being a linear combination of said measured values, said calculation means (3) comprise :

means (36) sampling and digitisation of said measurement signals of said longitudinal cyclic pitch (Pcx), of said lateral cyclic pitch (Pcy), of said longitudinal acceleration ($\gamma$x), of said lateral acceleration ($\gamma$y), of said collective pitch (Pcol) and of said pitch (Pac) of said tail rotor,

memorisation means (371) of the active memory type intended to memorise the instantaneous value of said digitised measurement values,

memorisation means of said passive memory type comprising, for a helicopter of given type, a table of values of coefficients $\alpha1,... \alpha7, \beta1..... \beta7$ permitting establishment of linear combinations expressing said longitudinal (Vax) and lateral (Vay) speeds as a function of operating parameters.

12. Apparatus according to claim 11, wherein said calculation means further comprise a calculation program for values of linear combinations expressing said longitudinal (Vax) and transverse (Vay) speed.

13. Apparatus according to claim 11, wherein said calculation means further comprise a calculation program for changing axis by rotation of substantially 45°.

14. Apparatus according to claim 7, wherein further comprising means for displaying instantaneous values of said longitudinal (Vax) and lateral (Vay) speeds.

## FIG.1a

## FIG.1b

FIG. 2

FIG_3

EP 0 280 599 B1

FIG_4